# EUROPÄISCHE PATENTSCHRIFT

(11) **EP 3 259 089 B1**
(45) Veröffentlichungstag und Bekanntmachung des Hinweises auf die Patenterteilung: **07.09.2022**
(21) Anmeldenummer: 15756690.2
(22) Anmeldetag: 28.07.2015
(51) Int. Cl.: B23F 23/06, B23B 31/02, B23B 31/40

(54) **AUSGLEICHSEINRICHTUNG UND MIT SOLCHER AUSGLEICHSEINRICHTUNG AUSGESTATTETE AUFSPANNEINRICHTUNG FÜR WERKSTÜCKE**
COMPENSATION DEVICE AND CLAMPING DEVICE FOR WORKPIECES EQUIPPED WITH A COMPENSATION DEVICE OF THIS TYPE
DISPOSITIF DE COMPENSATION ET DISPOSITIF DE FIXATION POUR PIÈCES ÉQUIPÉ D'UN TEL DISPOSITIF DE COMPENSATION

(30) Priorität: 18.02.2015 DE 102015002140
(43) Veröffentlichungstag der Anmeldung: 27.12.2017
(73) Patentinhaber: The Gleason Works, Rochester, NY 14692-2970 (US)
(72) Erfinder: SCHALLER, Anton, 85293 Reichertshausen (DE); Gollwitzer, Markus, 80999 München (DE)
(74) Vertreter: Leinweber & Zimmermann
(86) Internationale Anmeldenummer: PCT/IB2015/001270
(87) Internationale Veröffentlichungsnummer: WO 2016/132170

(56) Entgegenhaltungen:
- WO-A1-2011/059945
- US-A- 3 083 976
- US-A- 3 143 907
- US-A- 4 677 885

## Beschreibung

Die Erfindung betrifft eine Ausgleichseinrichtung für ein planausgeglichenes, über eine eine Aufspannachse definierende Aufspanneinrichtung erfolgendes Aufspannen eines eine Drehachse aufweisenden und mit einer Planseite an einer Anlagefläche der Ausgleichseinrichtung anliegenden, insbesondere verzahnten oder zu verzahnenden Werkstücks, wobei die Werkstückdrehachse bei Betätigung der Aufspanneinrichtung koaxial zur Aufspannachse zentriert wird und dabei etwaige Abweichungen der anliegenden Planseite von einer Orthogonalität zur Werkstückdrehachse durch eine an der Ausgleichseinrichtung erfolgende Ausweichbewegung ausgeglichen werden.

Derartige Ausgleichseinrichtungen sind bekannt, beispielsweise aus der unveröffentlichten DE . 10 2013 018 243. Deren Erfordernis lässt sich aus den folgenden Überlegungen erkennen. Liegt ein Werkstück, dessen anliegende Planseite keinerlei Abweichungen von einer Orthogonalität zur Werkstückdrehachse hat, auf einer orthogonal zur Aufspannachse anliegenden Anlagefläche an, verlaufen die Werkstückdrehachse und die Aufspannachse parallel und stimmen bei der zentrierenden Wirkung der betätigten Aufspanneinrichtung schließlich für das aufgespannte Werkstück überein. Sind dagegen Abweichungen der anliegenden Planseite des Werkstücks von einer Orthogonalität zur Werkstückdrehachse vorhanden, was zumindest in geringem Ausmaß beispielsweise durch an der Planseite gebildete Härteverzüge auftreten kann, die nicht berichtigt wurden, weicht die Werkstückdrehachse in ihrer Orientierung von derjenigen der Aufspannachse ab, so daß bei Betätigung der Aufspanneinrichtung deren zentrierende Wirkung mit der festen Anlage der "schiefen" Planseite an der "geraden" Anlagefläche im konkurrierenden Verhältnis steht, mit der Konsequenz eines Verkantens beim Aufspannen und einer nicht gewährleisteten Koaxialität von Werkstückdrehachse und Aufspannachse. Da die Aufspannachse mit der Spindelachse einer mit der Aufspanneinrichtung gekoppelten oder zu koppelnden Werkstückspindel übereinstimmt, würde es dann zu wenn auch geringen Taumelbewegungen der Werkstückdrehachse um die Spindelachse führen, wenn das Werkstück bearbeitet wird. Zur Vermeidung dieser Taumelbewegung werden die genannten Ausgleichseinrichtungen eingesetzt, welche die oben genannte Konfliktsituation dadurch beseitigen, daß sie mit einer Ausweichbewegung eine Anlage der Planseite an der Anlagefläche bei koaxialen Achsen erlaubt.

In der DE 10 2013 018 243 ist die Anlagefläche der Ausgleichseinrichtung in ihrer räumlichen Lage bezüglich der Aufspannachse über jeweilige Lager und Gegenlager aufweisende Kipplager mit zwei unabhängigen Kipp-Freiheitsgraden änderbar. Über die zwei unabhängigen Kipp-Freiheitsgrade ist ein Kreuzgelenk gebildet und die Ausweichbewegung der Ausgleichseinrichtung ist somit eine Überlagerung zweier Kippbewegungen. Die in DE 10 2013 018 243 eine die Kipplager aufweisende Montageeinheit gebildete Ausgleichseinrichtung weist gegenüber früheren, als Kreuzgelenk ausgeführten Ausgleichseinrichtungen den Vorteil auf, die erreichte Verzahnungsqualität über einen möglichst langen Zeitraum hinweg beizubehalten.

Der Erfindung liegt die Aufgabe zugrunde, eine Ausgleichseinrichtung der eingangs genannten Art insbesondere hinsichtlich der Güte der erreichbaren Bearbeitungsqualitäten der bearbeiteten Werkstücke, insbesondere deren Verzahnungen, zu verbessern.

US 3,083,976 A offenbart eine Ausgleichseinrichtung mit Merkmalen des Oberbegriffs von Anspruch 1. Auch US 4,677,885 A beschäftigt sich mit der Aufspannung von Werkstücken. US 3,143,907 A offenbart eine Ausgleichseinrichtung nach dem Oberbegriff von Anspruch 1.

Die Aufgabe wird von der Erfindung durch eine Weiterbildung der Ausgleichseinrichtung mit den Merkmalen von Anspruch 1 gelöst. So ist zum einen erfindungsgemäß vorgesehen,

daß die Anlagefläche wenigstens drei voneinander beabstandete Anlagebereiche aufweist und die Ausweichbewegung in einer axialen Bewegung der Anlagebereiche besteht.

Demnach liegt der erfindungsgemäßen Ausgleichseinrichtung ein völlig anderes Prinzip zugrunde. Es erfolgt kein Verkippen der gesamten Anlagefläche über (zwei) gemeinsame Kippachsen mehr, sondern eine abhängig von der Winkellage des Werkstücks mit unebener Planseite erfolgende axiale Bewegung der einzelnen Anlagebereiche in einem jeweiligen zum Erreichen der Planparallelität erforderlichen Umfang. Auf diese Weise werden Lateralversätze, die durch die Kippbewegungen im Stand der Technik induziert werden, beseitigt und die Aufspannproblematik auf lokal unterschiedliche Ausweichbewegungen hinsichtlich nur einer (der axialen) Achse beschränkt. Auf diese Weise gelingt eine nochmals präzisere Aufspannung hinsichtlich einer optimierten Koaxialität von Werkstückdrehachse und Aufspannachse.

Die Aufspanneinrichtungen, die im Einsatz mit der Ausgleichseinrichtung zusammenwirken, sind hinsichtlich ihres Spannmechanismus nicht in besonderer Weise eingeschränkt. Es kann beispielsweise der in Fig. 1 der DE 10 2013 018 243 gezeigte Expansionsspanndorn zum Einsatz kommen, aber auch andere Mechanismen wie zum Beispiel Sägezahnbuchsen oder Spiethbuchsen.

In einer besonders bevorzugten Ausführungsform sind die Anlagebereiche elastisch gelagert und die Ausweichbewegung ist elastisch reversibel. Dies erlaubt eine dauerhafte Anwendung mit reproduzierter Reaktion auf gleiche Randbedingungen, wie zum Beispiel der Größe auftretender axialer Spannkräfte der Aufspanneinrichtung.

Weiter erfindungsgemäß sind zwischen den Anlagebereichen axial starre Bereiche gebildet. Auf diese Weise kommt der Ausgleichseinrichtung eine ein Halten der Werkstücke gegen axiale Kräfte unterstützende Wirkung zu. In einem Axialschnitt durch die axial starren Bereiche gesehen, sind die axial starren Bereiche bevorzugt kontinuierlich von einem axialen bis zum anderen axialen Ende der Ausgleichseinrichtung gebildet.

Die Orientierung der Werkstückdrehachse im Einsatz hängt natürlich von der Orientierung der in der jeweiligen Maschine eingesetzten Spindeln ab, beispielsweise vertikal wenn es sich um eine Vertikalmaschine handelt oder auch horizontal, wenn es sich um eine Horizontalmaschine handelt (natürlich sind auch schräg im Raum liegende Werkstückdrehachsen möglich). Im Folgenden wird zu Erläuterungszwecken in einigen Fällen von dem Bild einer vertikalen Spindel und damit Aufspannrichtung ausgegangen, die Anlagefläche wäre dann eine Auflagefläche und axial unterschiedliche Bereiche könnten als unterschiedliche Höhenniveaus bezeichnet werden.

Weiter erfindungsgemäß ist vorgesehen, daß die Anlagebereiche gegenüber einem axialen Höhenniveau der starren Bereiche axial vorragen. Der dabei entstehende axiale Niveauunterschied wird dabei bevorzug eingestellt in Abhängigkeit der maximal zu erwartenden erforderlich Axialamplitude der Ausweichbewegung.

Weiter erfindungsgemäß ist axial unterhalb der Anlagebereiche eine strukturelle Materialschwächung vorgesehen. Dies erlaubt eine Elastizität der Ausweichbewegung bedingt durch strukturelle Formgebung und nicht durch Wahl eines elastischen Materials. Die Materialschwächung kann in Form einer Materialentfernung gegeben sein.

So ist insbesondere vorgesehen, daß das Material der Ausgleichseinrichtung selbst kein nachgiebiges/elastisches Material wie etwa Gummi ist, insbesondere ist vorgesehen, daß die Ausgleichseinrichtung eine Montageeinheit ist, die zum Beispiel einstückig und insbesondere aus einem harten Material, wie etwa bevorzugt gehärtetem Stahl, gebildet ist. In derartigen bevorzugten Ausführungsformen ist somit vorgesehen, daß bei einer fiktiven Ausgleichseinrichtung in Form eines durch die Außenabmessungen der Ausgleichseinrichtung vorgegebenen Volumens bei voller Materialfüllung des Volumens mit dem Material der Ausgleichseinrichtung wirksame planausgleichende Ausweichbewegungen nicht möglich wären. Auch andere harte Materialien sind anstelle des gehärteten Stahls einsetzbar, es sollte jedoch zu einem harten Bauteil führen.

Weiter erfindungsgemäß erfolgt die Ausweichbewegung nach dem Prinzip der Balkenbiegung Auf diese Weise wird erreicht, daß zum einen die erforderlichen Ausweichbewegungen möglich sind und zum anderen die Ausgleichseinrichtung insgesamt im aufgespannten Zustand des Werkstücks eine steife Unterstützung des Werkstücks gegen axiale Bearbeitungskräfte liefert.

So ist insbesondere vorgesehen, daß einem, insbesondere jedem der Anlagebereiche jeweils ein insbesondere beidseitig gestützter Balken zugeordnet ist, auf denen der/die Anlagebereiche insbesondere mittig angeordnet sind. Die Form des Balkens ist nicht in besonderer Weise eingeschränkt. In einer Projektion auf die Ebene der Anlagefläche wird eine Balkenform eines Ringsegments bevorzugt, aufgrund der unten erläuterten bevorzugten Gestaltung der Ausgleichseinrichtung als ringartige Struktur. Der Höhenverlauf des Balkens in einer dazu senkrechten Ebene gesehen kann bevorzugt auf gleichem Höhenniveau verlaufen, wobei dann die zum Beispiel mittig des Balkens gelegenen Anlagebereiche gegenüber dem Rest des Balkens erhöht sind. In diesem Zusammenhang ist vorgesehen, daß die axial starren Bereiche die Balkenabstützung beinhalten. Mit anderen Worten bilden die axial starren Bereiche und der Balken bei beidseitiger Abstützung dann gemeinsam eine Brückenstruktur.

Besonders bevorzugt bleibt die Lage eines Anlagebereichs von einer an einem anderen Anlagebereich erfolgenden Ausweichbewegung unbeeinflusst. Mit anderen Worten sind die Anlagebereiche untereinander bewegungsentkoppelt. Die Bewegungsentkopplung erlaubt natürlich, daß sich die Anlagebereiche, bedingt durch eine äußere Kraft, wie die zum Beispiel über das Werkstück mittels der Aufspanneinrichtung auf die Ausgleichseinrichtung wirkende axiale Spannkraft, dazu führt, daß mehrere oder alle Anlagebereiche eine Ausweichbewegung durchführen. Vielmehr besagt die Bewegungsentkopplung, daß bei Betrachtung der punktuellen Belastung eines Anlagebereichs, der zu Ausweichbewegungen führt, keine Bewegung eines anderen Anlagebereichs bewirkt, wie es etwa bei den Ausgleichseinrichtungen mit Kreuzgelenk der Fall ist.

Zweckmäßig weist die Ausgleichseinrichtung eine ringartige Struktur auf. Das zentrale Durchgangsloch der ringartigen Struktur kann demnach von einem Spanndorn einer Aufspanneinrichtung durchdrungen werden. Aufgrund der Ringstruktur können die oben genannten Balken in Umfangsrichtung über den Erstreckungswinkel gemessen eine Ausdehnung haben, die größer ist als 40°, vorzugsweise größer als 60°, und 120° nicht übersteigt. Insbesondere wird vorgesehen, daß die freie Länge des Balkens 100° oder weniger beträgt, insbesondere 90° oder weniger, um ausreichend angularen Raum für die axial starren Bereiche zu belassen.

Zudem ist bevorzugt vorgesehen, daß die Ringstruktur eine Drehsymmetrie in Form einer 2π/n-Drehsymmetrie aufweist, wobei n die Anzahl der Anlagebereiche der Anlagefläche ist. Allgemeiner wird es bevorzugt, daß die Anlagebereiche azimutal äquidistant angeordnet sind. Besonders bevorzugt weist die Ausgleichseinrichtung genau drei voneinander beabstandete Anlagebereiche auf, die alleine betrachtet insbesondere zusammenhängende Anlageflächen bilden. Auch mit Zum Beispiel vier Bereichen lassen sich gute Ergebnisse erzielen, bevorzugt sollte die Anzahl der Anlagebereiche acht, insbesondere sechs nicht übersteigen.

In einer bevorzugten Ausführungsform weist die Ausgleichseinrichtung anlageabseitig eine ringförmige Basisplatte auf, deren orthogonal zur Axialrichtung verlaufende Ringstärke insbesondere größer ist als die der Anlagebereiche/Balken, insbesondere um mindestens 30 Prozent, bevorzugt um wenigstens 60 Prozent größer. Über die ringförmige Basisplatte werden zum einen die einzelnen Anlagebereiche nebst ihrer Lagerung miteinander verbunden. Zum anderen wird durch sie eine gemeinsame Trägerringplatte für die Anlage an der Aufspanneinrichtung gebildet. Die jeweiligen Lagerungen der Anlagebereiche der Anlagefläche für die Planseite des Werkstücks liegen bevorzugt axial auf gleicher Höhe (im unbelasteten Zustand). Zudem wird es bevorzugt, wenn azimutale Bereiche der Ausgleichseinrichtung nur aus der ringförmigen Basisplatte bestehen, wodurch eine Isolation der einzelnen Anlagebereiche untereinander verstärkt wird. Zweckmäßig weist die Ausgleichseinrichtung Befestigungsbereiche für ihre Befestigung an einer Aufspanneinrichtung/Spindel auf. Diese können beispielsweise in Form axialer Durchgangslöcher vorgesehen sein, welche wiederum in den Bereichen der Ausgleicheinrichtung angeordnet sein können, in denen lediglich die ringförmige Basisplatte vorgesehen ist.

Ebenfalls unter Schutz gestellt wird von der Erfindung die Verwendung einer Ausgleichseinrichtung mit einem oder mehreren der oben beschriebenen Merkmale für eine Aufspanneinrichtung und/oder Spindel, die für eine drehend angetriebene Lagerung eines eine Verzahnung aufweisenden oder mit einer Verzahnung zu versehenden Werkstücks eingesetzt wird.

Zudem wird von der Erfindung auch unter Schutz gestellt eine Aufspanneinrichtung gemäß Anspruch 10 zum Aufspannen eines derartigen Werkstücks, die mit einer Ausgleichseinrichtung nach einem der vorgenannten Aspekte bestückt ist, wie auch eine Spindelanordnung gemäß Anspruch 11 mit einer solchen Aufspanneinrichtung.

Bevorzugt sind Materialeigenschaften und Abmessungen des Balkens dabei insbesondere für eine beidseitige Balkenabstützung derart auf die von der Aufspannvorrichtung beim Spannen auf einen Auflagebereich wirkende Kraft abgestimmt, daß das durch die dritte Potenz der Balkenlänge geteilte Produkt aus Elastizitätsmodul des Balkens und dessen Flächenträgheitsmoment kleiner ist als die durch 2,5 mm geteilte Kraft K, weiter bevorzugt kleiner als 70 Prozent dieses Wertes, weiterhin kleiner als 40 Prozent dieses Wertes, insbesondere aber auch größer als 5 Prozent dieses Wertes, weiter bevorzugt auch größer als 10 Prozent dieses Wertes. Für insbesondere einseitige Balkenabstützungen können diese Abstimmungen mit einem zusätzlichen Faktor 16 für die jeweilige Bedingung herangezogen werden (d. h. kleiner als die durch 2,5 mm geteilte 16-fache Kraft 16 K).

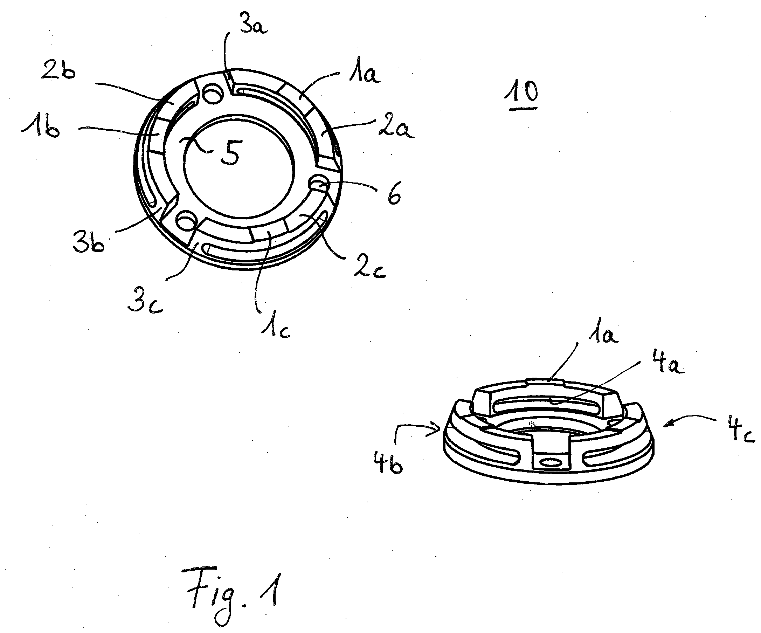

Weitere Merkmale, Einzelheiten und Vorteile der Erfindung ergeben sich aus der nachfolgenden Beschreibung der beigefügten Figuren, von denen
- Fig. 1: eine Ausgleichseinrichtung in zwei unterschiedlich perspektivischen Ansichten zeigt, und
- Fig. 2: die Ausgleichseinrichtung aus Fig. 1 an einen Bereich einer Aufspanneinrichtung montiert zeigt.

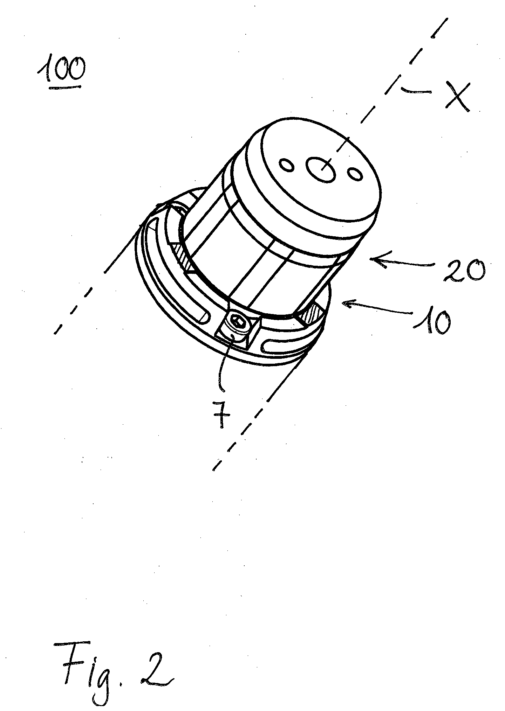

Im Folgenden wird ein Ausführungsbeispiel der Erfindung beschrieben, bei dem die Ausgleichseinrichtung ein mit dem Bezugszeichen 10 versehener Anlagering ist. Der Anlagering 10 weist eine flache ringförmige Basis 5 auf, die an drei azimutal äquidistanten Stellen von Montagelöchern 6 durchdrungen ist. Über die Montagelöcher 6 lässt sich der Anlagering 10 beispielsweise mittels Schraubbolzen 7 an einer Aufspannvorrichtung 100 befestigen, über koaxial zu den Montagelöchern 6 vorgesehene Gewindebohrungen in der Aufspannvorrichtung 100. Dabei durchdringt ein Spanndorn 20 der Aufspannvorrichtung 100 den Ringinnenraum des Anlagerings 10 (Fig. 2).

Zwischen den Montagelöchern 6 sind am Außenrand der Basis 5 im Wesentlichen kreissegmentförmige Wände aufgerichtet, die jedoch von durchgehenden radialen Schlitzen 4a, 4b, 4c durchdrungen sind, so dass die axial oberen Bereiche der jeweiligen Wände jeweils einen Balken 2a, 2b, 2c bilden, der beidseitig von einem Paar Tragesäulen 3a, 3b, 3c getragen wird. Mittig jedes Balkens 2a, 2b, 2c ist ein gegenüber der restlichen axialen Balkenhöhe axial um in diesem Ausführungsbeispiel 0,2 mm vorragende Auflagen 1a, 1b, 1c gebildet, auf denen die Planseite eines Werkstückes, beispielsweise eines Zahnrades oder noch unverzahnten Zahnradrohlings, anliegt bzw. aufliegt, sofern die orthogonal zur Basis 5 in deren Zentrum verlaufende Aufspannachse x vertikal gerichtet ist. Über die drei Anlagen 1a, 1b und 1c erfolgt somit eine "Dreipunktlagerung" des Werkstücks.

Aufgrund der durch die Säulen 3i, 3i und den Balken 2i (i = a, b, c) gebildeten voneinander entkoppelten brückenartigen Tragestrukturen für die Auflagen 1i können die Auflagen 1i unabhängig von den anderen Auflagen 1j bei axialer Belastung eine Ausweichbewegung nach dem Prinzip der Balkenbiegung ausführen. Weicht die Planseite eines Werkstücks bezüglich der Werkstückdrehachse von einer orthogonalen Lage/Orientierung ab, führt dies beim Aufspannen des Werkstücks mittels der Spannvorrichtung 100 zu axialen Belastungen, die durch entsprechende axialen Ausweichbewegungen durch die jeweiligen Balkenbiegungen mit entsprechend unterschiedlicher Amplitude ausgeglichen werden, die dazu führen, dass die Werkstückdrehachse schließlich beim aufgespannten Werkstück koaxial zur Aufspannachse liegt. Man erkennt, dass beispielsweise bei einer isoliert betrachteten axialen Ausweichbewegung der Anlage 1c durch Biegung des von den Säulen 3c gestützten Balkens 2c aufgrund der Entkopplung der jeweiligen Segmente des Anlagerings 10 keine Auf- oder Abwärtsbewegung der anderen Anlagen 1a, 1b erfolgt.

Nach Entspannen der Aufspannvorrichtung 100 kehren die vorher belasteten Balken 2i wieder in ihre Ausgangsstellung zurück. Die Ausweichbewegung der Anlagen 1i beruht somit nicht aufgrund einer Materialnachgiebigkeit, sondern aufgrund der Struktureigenschaften des Anlagerings 10, nämlich der Brückenstruktur 3i-2i-3i aufgrund der strukturellen Schwächung durch die Schlitze 4i.

Für den Fall einer nicht dargestellten einseitigen Abstützung könnte der Auflagebereiche auch zum Beispiel am freien Balkenende angeordnet sein.

Der Anlagering 10 ist dabei aus einem harten Material wie etwa gehärtetem Stahl gebildet. Während ein Werkstück über den Anlagering 10 aufgespannt ist, liefert der Anlagering 10 somit nicht nur einen Planausgleich, der alleinig beispielsweise auch durch einen Ring aus Schaumstoff erreichbar wäre, sondern auch eine steife Abstützung des aufgespannten Werkstückes als weiteren Support gegen axiale Lasten, und zudem ein Bauteil hoher Dauerhaftigkeit.

Die Erfindung ist nicht auf die im Ausführungsbeispiel gezeigten Merkmale eingeschränkt.

## Patentansprüche

1. Ausgleichseinrichtung (10) für ein planausgeglichenes, über eine eine Aufspannachse (X) definierende Aufspanneinrichtung (100) erfolgendes Aufspannen eines eine Drehachse aufweisenden und mit einer Planseite an einer Anlagefläche (1) der Ausgleichseinrichtung anliegenden, insbesondere verzahnten oder zu verzahnenden Werkstücks, wobei die Werkstückdrehachse bei Betätigung der Aufspanneinrichtung (100) koaxial zur Aufspannachse (X) zentriert wird und dabei etwaige Abweichungen der anliegenden Planseite von einer Orthogonalität zur Werkstückdrehachse durch eine an der Ausgleichseinrichtung (10) erfolgende Ausweichbewegung ausgeglichen werden, wobei die Anlagefläche (1) wenigstens drei voneinander beabstandete Anlagebereiche (1a, 1b, 1c) aufweist und die Ausweichbewegung in einer axialen Bewegung der Anlagebereiche (1a, 1b, 1c) besteht, zwischen den Anlagebereichen (1a, 1b, 1c) axial starre Bereiche (3a, 3b, 3c) gebildet sind und die Anlagebereiche (1a, 1b, 1c) gegenüber einem axialen Höhenniveau der starren Bereiche (3a, 3b, 3c) axial vorragen,
**dadurch gekennzeichnet, dass** axial unterhalb der Anlagebereiche eine strukturelle Materialschwächung (4a, 4b, 4c) vorgesehen ist und die Ausweichbewegung nach dem Prinzip der Balkenbiegung erfolgt.

2. Ausgleichseinrichtung nach Anspruch 1, bei der die Anlagebereiche (1a, 1b, 1c) elastisch gelagert sind und die Ausweichbewegung elastisch reversibel ist.

3. Ausgleichseinrichtung nach einem der vorhergehenden Ansprüche, bei der das Material der Ausgleichseinrichtung nicht nachgiebig ist und die Ausgleichseinrichtung eine insbesondere einstückige Montageeinheit ist.

4. Ausgleichseinrichtung nach einem der vorhergehenden Ansprüche, bei der den Anlagebereichen (1a, 1b, 1c) jeweils ein insbesondere beidseitig gestützter Balken (2a, 2b, 2c) zugeordnet ist, auf denen sie insbesondere mittig angeordnet sind.

5. Ausgleichseinrichtung nach Anspruch 4, bei der die axial starren Bereiche (3a, 3b, 3c) die Balkenabstützung beinhalten.

6. Ausgleichseinrichtung nach einem der vorhergehenden Ansprüche, bei der die Lage eines Anlagebereichs (1a, 1b, 1c) von einer an einem anderen Anlagebereich (1b, 1c; 1a, 1c; 1a, 1b) erfolgenden Ausweichbewegung unbeeinflußt bleibt.

7. Ausgleichseinrichtung nach einem der vorhergehenden Ansprüche, die eine ringartige Struktur aufweist.

8. Ausgleichseinrichtung nach einem der vorhergehenden Ansprüche, bei der die Ausgleichseinrichtung anlageabseitig eine ringförmige Basisplatte (5) aufweist, deren orthogonal zur Axialrichtung verlaufende Ringstärke insbesondere größer ist als die der Anlagebereiche (1a, 1b, 1c)/Balken (2a, 2b, 2c).

9. Ausgleichseinrichtung nach einem der vorhergehenden Ansprüche, bei der die Ausgleichseinrichtung Befestigungsbereiche insbesondere in Form von axialen Durchgangslöchern (6) aufweist.

10. Aufspanneinrichtung zum Aufspannen eines insbesondere verzahnten oder zu verzahnenden Werkstücks mit einer Ausgleichseinrichtung nach einem der vorhergehenden Ansprüche.

11. Spindelanordnung mit einer Aufspanneinrichtung nach Anspruch 10.

## Claims

1. A compensation device (10) for a flat-compensated clamping of a workpiece, said workpiece comprising in particular a toothed workpiece or a workpiece to be toothed, the clamping being carried out via a clamping device (100) defining a clamping axis (X), and said workpiece having an axis of rotation and abutting a contact surface (1) of the compensation device with a flat side thereof, wherein the workpiece axis of rotation is centred coaxially to the clamping axis (X) when the clamping device (100) is actuated, and any deviations arising in the abutting flat side from an orthogonality relative to the workpiece axis of rotation are compensated for by a deflection movement carried out at the compensation device (10), wherein the contact surface (1) comprises at least three contact areas (1a, 1b, 1c) spaced apart from each other and the deflection movement consists of an axial movement of the contact areas (1a, 1b, 1c), axially rigid areas (3a, 3b, 3c) are formed between the contact areas (1a, 1b, 1c), and said contact areas (1a, 1b, 1c) protrude axially relative to an axial height level of the rigid areas (3a, 3b, 3c),
**characterised in that** a structural material weakness (4a, 4b, 4c) is provided axially below the contact areas, and the deflection movement is carried out according to the beam bending principle.

2. The compensation device in accordance with claim 1, wherein the contact areas (1a, 1b, 1c) are arranged resiliently and the deflection movement is resiliently reversible.

3. The compensation device in accordance with one of the preceding claims, wherein the material of the compensation device is not flexible and the compensation device is in particular an integral mounting unit.

4. The compensation device in accordance with one of the preceding claims, wherein a beam (2a, 2b, 2c) that is in particular supported on both sides is assigned to each of the contact areas (1a, 1b, 1c), said contact areas being in particular arranged centrally on said beams.

5. The compensation device in accordance with claim 4, wherein the axially rigid areas (3a, 3b, 3c) include the beam support.

6. The compensation device in accordance with one of the preceding claims, wherein the position of one contact area (1a, 1b, 1c) remains unaffected by a deflection movement carried out at another contact area (1b, 1c 1a, 1c; 1a, 1b).

7. The compensation device in accordance with one of the preceding claims, having a ring-shaped structure.

8. The compensation device in accordance with one of the preceding claims, wherein the compensation device has a ring-shaped base plate (5) on the side of said device that is remote from the contact, the ring thickness of which plate, extending orthogonally to the axial direction, is in particular greater than that of the contact areas (1a, 1b, 1c)/beams (2a, 2b, 2c).

9. The compensation device in accordance with one of the preceding claims, wherein the compensation device has fixing areas, in particular in the form of axial through-holes (6).

10. A clamping device, comprising a compensation device in accordance with one of the preceding claims, for the clamping of a workpiece, said workpiece comprising in particular a toothed workpiece or a workpiece to be toothed.

11. A spindle arrangement comprising a clamping device in accordance with claim 10.

## Revendications

1. Dispositif de compensation (10) permettant de réaliser un alignement de plan lorsqu'une pièce, notamment une pièce dentée ou dont la denture doit être réalisée, qui présente un axe de rotation et qui repose par une face plane sur une surface d'appui (1) du dispositif de compensation, est fixée par l'intermédiaire d'un dispositif de fixation (100) définissant un axe de fixation (X), ledit axe de rotation de la pièce étant centré coaxialement à l'axe de fixation (X), lors de l'actionnement du dispositif de fixation (100), et les éventuels écarts d'orthogonalité de la face plane en appui, par rapport à l'axe de rotation de la pièce, étant compensés par un mouvement de déport produit au niveau du dispositif de compensation (10), ladite surface d'appui (1) présentant au moins trois zones d'appui (1a, 1b, 1c) espacées les unes des autres et le mouvement de déport consistant en un mouvement axial des zones d'appui (1a, 1b, 1c), des zones axialement rigides (3a, 3b, 3c) étant formées entre lesdites zones d'appui (1a, 1b, 1c), et lesdites zones d'appui (1a, 1b, 1c) faisant saillie axialement par rapport à un niveau de hauteur axial des zones rigides (3a, 3b, 3c),
**caractérisé en ce qu'**il est prévu, axialement sous les zones d'appui, un affaiblissement structurel du matériau (4a, 4b, 4c) et **en ce que** le mouvement de déport s'effectue selon le principe du cintrage des poutres.

2. Dispositif de compensation selon la revendication 1, dans lequel les zones d'appui (1a, 1b, 1c) sont agencées de manière élastique et le mouvement de déport est élastiquement réversible.

3. Dispositif de compensation selon l'une des revendications précédentes, dans lequel le matériau du dispositif de compensation n'est pas souple et le dispositif de compensation consiste notamment en une unité de montage en un seul tenant.

4. Dispositif de compensation selon l'une des revendications précédentes, dans lequel une traverse (2a, 2b, 2c), notamment supportée à chaque extrémité, est respectivement associée aux zones d'appui (1a, 1b, 1c), lesquelles sont notamment situées au milieu desdites traverses.

5. Dispositif de compensation selon la revendication 4, dans lequel les zones axialement rigides (3a, 3b, 3c) contiennent le support des traverses.

6. Dispositif de compensation selon l'une des revendications précédentes, dans lequel la situation d'une zone d'appui (1a, 1b, 1c) demeure inchangée, quel que soit le mouvement de déport ayant lieu au niveau d'une autre zone d'appui (1b, 1c ; 1a, 1c ; 1a, 1b).

7. Dispositif de compensation selon l'une des revendications précédentes, présentant une structure en type annulaire.

8. Dispositif de compensation selon l'une des revendications précédentes, dans lequel le dispositif de compensation présente, à l'écart de l'appui, une plaque de base annulaire (5) dont l'épaisseur, orthogonalement à la direction axiale, est notamment supérieure à celle des zones d'appui (1a, 1b, lc)/traverses (2a, 2b, 2c).

9. Dispositif de compensation selon l'une des revendications précédentes, ledit dispositif de compensation présentant des zones de fixation notamment sous la forme de trous traversants axiaux (6).

10. Dispositif de fixation permettant de fixer une pièce notamment dentée ou dont la denture doit être réalisée et comportant un dispositif de compensation selon l'une des revendications précédentes.

11. Système de broche comportant un dispositif de fixation selon la revendication 10.
